Europäisches Patentamt

European Patent Office

Office européen des brevets

(11) Numéro de publication: **0 213 416 B1**

# (12) FASCICULE DE BREVET EUROPEEN

(45) Date de publication de fascicule du brevet:
**29.05.91**

(51) Int. Cl.⁵: **A01N 63/02**, A01N 31/02

(21) Numéro de dépôt: **86110695.3**

(22) Date de dépôt: **02.08.86**

(54) **Procédé de préparation d'une composition utilisable pour stimuler la croissance des plantes.**

(30) Priorité: **22.08.85 CH 3608/85**

(43) Date de publication de la demande:
**11.03.87 Bulletin 87/11**

(45) Mention de la délivrance du brevet:
**29.05.91 Bulletin 91/22**

(84) Etats contractants désignés:
**AT BE CH DE FR GB IT LI LU NL SE**

(56) Documents cités:
**EP-A- 0 044 717**
**GB-A- 2 118 158**

**KIRK-OTHMER: "Encyclopedia of Chemical Technology", vol. 20, 3ième édition, 1982, pages 737-747, John Wiley & Sons, New York, US**

(73) Titulaire: **SOCIETE DES PRODUITS NESTLE S.A.**
**Case postale 353**
**CH-1800 Vevey(CH)**

(72) Inventeur: **Hirsbrunner, Pierre**
**El Cantero Chemin des Romains**
**CH-1801 Les Monts-de-Corsier(CH)**

## Description

L'invention concerne un procédé d'extraction d'alcools primaires en $C_{28}$-$C_{34}$ à partir de shellac.

La substance naturelle que se propose de traiter le procédé selon la présente invention est le shellac. Le shellac est une sécrétion résineuse dure d'un insecte qui est un parasite de certains arbres et buissons d'Inde, de Birmanie et de Thaïlande. Ce petit insecte, Kernia lacca (ou Laccifer lacca), est de la famille des coccoïdés et sécrète le shellac comme couverture de protection pour sa larve. La composition du shellac n'est pas connue de manière précise et certaine et il en existe plusieurs qualités sur le marché. (Kirk-Othmer, Vol. 18, pages 21-27, 1969).

On appelle cire de shellac la fraction riche en alcools primaires en $C_{28}$-$C_{34}$ extraite à partir de shellac. Il est possible de trouver sur le marché directement la cire de shellac, par exemple par la Société Nestler. Dans ce cas, la proportion des alcools primaires en $C_{28}$-$C_{34}$ n'est que de l'ordre de 50 à 70%.

Le but de la présente invention est de mettre au point un procédé d'extraction d'alcools primaires en $C_{28}$-$C_{34}$ à partir de shellac pour obtenir une cire de shellac contenant entre 70 et 80% desdits alcools.

L'invention concerne un procédé d'extraction d'alcools primaires en $C_{28}$-$C_{34}$ à partir de shellac, dans lequel on dissout du shellac brut dans un mélange d'alcool en $C_1$-$C_4$ et d'un solvant halogéné, on filtre et on sépare les particules solides du filtrat par filtration, décantation ou centrifugation pour obtenir une cire de shellac.

Le filtrat est la phase liquide et on récupère le résidu solide, appelé résidu de shellac ou cire de shellac. C'est dans cette cire que se trouvent les composés ayant de manière connue en soi une activité sur la croissance des plantes.

Par shellac, on entend du shellac brut, c'est-à-dire le produit de base n'ayant subi aucun traitement préalable de purification.

Comme alcool en $C_1$-$C_4$, on utilise de préférence l'éthanol et comme solvant halogéné le dichlorométhane, le trichloréthylène ou le trichloréthane.

Le shellac n'étant soluble que dans l'alcool à chaud, on arrive à diminuer considérablement le temps de dissolution du shellac en ajoutant à l'alcool le solvant halogéné, évitant ainsi de chauffer le mélange. On effectue cette dissolution en un temps compris entre une et deux heures. Le second facteur influant sur la durée de dissolution est la température. La limite supérieure de la température est dictée par la présence de solvant halogéné; on opère donc à une température comprise entre 30 et 50° C.

Bien que la proportion d'alcool et de solvant halogéné ne soit pas critique, il est préférable d'utiliser par partie de shellac, une partie d'alcool et une partie de solvant halogéné.

Après dissolution, on effectue une filtration grossière de manière à récupérer le filtrat et à rejeter les fibres, la terre et les parties de bois contenues dans le shellac à traiter. Cette filtration s'effectue de préférence sur un tamis ayant une ouverture de mailles comprise entre 600 microns et 1000 microns.

On a ainsi dans ce filtrat la solution pure de shellac et des particules solides en suspension que l'on sépare par filtration, décantation ou par centrifugation classique. La filtration est faite sur un tamis ayant une ouverture de mailles comprise entre 50 et 200 microns. On récupère ce qu'on appelle le résidu de shellac ou encore cire de shellac. C'est ce résidu solide qui constitue la matière première utilisable pour être appliquée sur les plantes à traiter. Il représente entre 2 et 10% de la masse de départ. Ce résidu a été analysé et contient entre 70 et 80% d'alcools primaires en $C_{28}$-$C_{34}$, partiellement estérifiés. Le reste est constitué par des acides gras en $C_8$-$C_{18}$ et une fraction lipophile non identifiée.

Le but de l'opération suivante du procédé selon l'invention, est donc de transformer la cire de shellac de manière à pouvoir la pulvériser classiquement sur les plantes à traiter. On prépare à cet effet une émulsion ou une dispersion.

La suite de la description est faite en référence à l'exemple.

Exemple: Extraction de la cire de shellac

On dissout 1 kg de shellac dans un kilo d'éthanol et 1 kg de dichlorométhane à une température de 30° C pendant 1 heure 30 minutes sous agitation permanente. On filtre ensuite la solution sur un tamis de 600 microns et on centrifuge le filtrat obtenu. Après refroidissement et 12 heures de stockage, on obtient 70 grammes de cire de shellac qui est le produit actif pour la croissance des plantes.

La composition de cette cire de shellac est la suivante:

- 74 % d'alcools primaires $C_{28}$-$C_{34}$, partiellement estérifiés,
- 5 % d'acides gras $C_8$-$C_{18}$ (liés aux alcools) et
- 21 % de fraction lipophile non identifiée.

La répartition des alcools primaires est la suivante:

- 35 % de composé de formule $C_{28}H_{57}OH$ (octacosanol),
- 29 % de composé de formule $C_{30}H_{61}OH$ (triacantanol),
- 26 % de composé de formule $C_{32}H_{65}OH$ et

- 10 % de composé de formule $C_{34}H_{69}OH$.

**Revendications**

1. Procédé d'extraction d'alcools primaires en $C_{28}$-$C_{34}$ à partir de shellac, caractérisé en ce qu'on dissout du shellac brut dans un mélange d'alcool en $C_1$-$C_4$ et d'un solvant halogéné, on filtre et on sépare les particules solides du filtrat par filtration, décantation ou centrifugation pour obtenir une cire de shellac.

2. Procédé selon la revendication 1, caractérisé en ce qu'on utilise comme alcool l'éthanol et comme solvant halogéné un solvant choisi dans le groupe constitué par le dichlorométhane, le trichloréthylène et le trichloréthane.

3. Procédé selon l'une des revendications 1 ou 2, caractérisé en ce qu'on filtre sur un tamis ayant une ouverture de mailles comprise entre environ 600 et 1000 microns.

4. Procédé selon l'une des revendications 1 à 3, caractérisé en ce qu'on dissout le shellac pendant une durée d'environ 1 à 2 heures à une température comprise entre 30 et 50°C à raison d'environ 1 partie en poids de shellac pour 1 partie d'alcool en $C_1$-$C_4$ et une partie de solvant halogéné.

5. Procédé selon l'une des revendications 1 à 4, caractérisé en ce que la cire de shellac contient entre 70 et 80% d'alcools primaires en $C_{28}$-$C_{34}$.

**Claims**

1. A process of extraction of primary $C_{28}$-$C_{34}$ alcohols from shellac, characterized in that raw shellac is dissolved in a mixture of $C_1$-$C_4$ alcohol and a halogenated solvent, the solution is filtered and the solid particles of the filtrate are separated by filtration, decantation or centrifuging for obtaining a shellac wax.

2. A process as claimed in Claim 1, characterized in that the alcohol used is ethanol while the halogenated solvent used is selected from the group comprising dichloromethane, trichloroethylene and trichloroethane.

3. A process as claimed in Claim 1 or 2, characterized in that the solution is filtered through a sieve having a mesh width of from 600 to 1000 microns.

4. A process as claimed in any of Claims 1 to 3, characterized in that the shellac is dissolved from about 1 to 2 hours at a temperature of from 30 to 50°C in a quantity of approximately 1 part by weight shellac to 1 part $C_1$-$C_4$ alcohol and 1 part halogenated solvent.

5. A process as claimed in any of Claims 1 to 5, characterized in that the shellac wax contains from 70 to 80% primary $C_{28}$-$C_{34}$ alcohols.

**Ansprüche**

1. Verfahren zur Extraktion von primären $C_{28}$-$C_{34}$ Alkoholen aus Schellack, dadurch gekennzeichnet, daß man Rohschellack in einem Gemisch aus $C_1$-$C_4$ Alkohol und einem halogenierten Lösungsmittel auflöst, filtriert und die festen Teilchen durch Filtrieren, Dekantieren oder Zentrifugieren vom Filtrat abtrennt, um ein Schellackwachs zu erhalten.

2. Verfahren nach Anspruch 1, dadurch gekennzeichnet, daß man als Alkohol Ethanol verwendet und als halogeniertes Lösungsmittel ein aus der aus Dichlormethan, Trichlorethylen und Trichlorethan bestehenden Gruppe ausgewähltes Lösungsmittel verwendet.

3. Verfahren nach Anspruch 1 oder 2, dadurch gekennzeichnet, daß man über ein Filter filtriert, das eine Maschenöffnung von etwa 600 bis 1000 $\mu$m aufweist.

4. Verfahren nach einem der Ansprüche 1 bis 3, dadurch gekennzeichnet, daß man den Schellack während etwa 1 bis 2 Stunden bei einer Temperatur von 30 bis 50°C in einem Verhältnis von 1 Gew.-Teil Schellack auf ein Gew.-Teil $C_1$-$C_4$ Alkohol und 1 Gew.-Teil halogeniertes Lösungsmittel löst.

5. Verfahren nach einem der Ansprüche 1 bis 4, dadurch gekennzeichnet, daß das Schellackwachs von 70 bis 80 % primäre $C_{28}$-$C_{34}$ Alkohole enthält.